Europäisches Patentamt

European Patent Office

Office européen des brevets

Publication number: **0 292 069**

**A1**

# EUROPEAN PATENT APPLICATION

Application number: 88200987.1

Date of filing: **18.05.88**

Int. Cl.⁴ **G01D 5/26 , G01B 11/02**

Priority: **20.05.87 NL 8701207**

Date of publication of application:
**23.11.88 Bulletin 88/47**

Designated Contracting States:
**AT BE CH DE ES FR GB IT LI LU NL SE**

Applicant: **Staat der Nederlanden**
**(Staatsbedrijf der Posterijen, Telegrafie en**
**Telefonie)**
**P.O. Box 430**
**NL-2260 AK Leidschendam(NL)**

Inventor: **van Arnhem, Willem Cornelis**
**41 Vermeerlaan**
**NL-3764 WB Soest(NL)**
Inventor: **Kegel, Jacobus Adrianus**
**Sankt Hans Gränd 3 C/2**
**S-222 42 Lund(SE)**
Inventor: **Trommel, Eric Simon**
**319 Ruimtebaan**
**NL-2728 MP Zoetermeer(NL)**

## Device for measuring the movement of a pattern.

Device for measuring the movement of a geometric pattern, which for that purpose is put in contact with a series of sensors (1). The signal of one or more sensors of this series of sensors is read out by a reading-out device (2) and presented via a digitizing device (6a respectively 6b) to a processing device (7), where pattern shiftings are calculated from changes in the output signals of those sensors and represented on a display (8). At the initialization of the device, preceding the measurement of movement, the (e.g. two) sensors which will serve as actual measuring sensors for measuring the direction and the extent of the pattern movement, will be indicated by the processing device, the direction of movement being derived from the two measuring sensor signals and the extent of the movement from the signal of the sensor in the area with the greatest measuring sensitivity.

In the digitizing devices the measuring sensor signals presented are converted into discrete signals, equal to an n-fold of a step size which is derived from the greatest and the smallest value of all the sensor signals of the series of sensors read out by a reading-out device (2). In this way a maximum digitizing accuracy will be obtained, and, moreover, the influencing of the measurement results by variations in "overall" circumstances will be eliminated.

FIG. 1

## Device for measuring the movement of a pattern.

### A. Background of the invention

#### A1. Field of the invention

The invention relates to a device for measuring the movement of a spatially extending pattern of physical quantity differences, at least part of that pattern being brought into contact with a series of sensors, consisting of a multiple of sensors extending over a certain geometric area, which sensors each deliver a signal corresponding to the relevant local quantity.

#### A2. State of the art

Devices of the above-mentioned type, in which a series of sensors, in this case a series of photo diodes, is used for measuring the movement of an, in this case optical, pattern, such as an optical interference pattern coming from an interferometer, are generally known. With these devices the interference pattern is projected on the series of photo diodes, the photo diodes of which are sequentially read out. The reading-out signal obtained in this way will be further processed in a calculating device, for example a microprocessor, which calculates the movement of the interference pattern by comparing the consecutive reading-out signals.

The advantage of said known devices is that the entire pattern, in this case the interference pattern, is available. Moreover, the geometric position of the measuring points, formed by the sensors, which are part of the series of sensors, is well defined. A disadvantage, however, is formed by the sequential reading out and the further processing of the output signals of the series of sensors, due to which in the case of relatively quick pattern movements the speed of measuring will be relatively low and - as a consequence - also the accuracy of measurement will be small.

In addition to the aforesaid known devices there are also devices known in which not a series of sensors, but only one or two sensors, in this case photo diodes, are used for measuring the movement of an, in this case optical, pattern. Assuming that the course (e.g. block-shaped or sine-shaped) of the pattern is known, the signal of the sensor respectively two sensors is, in this case, delivered to a calculating device, which calculates the movement of the pattern from the course of the signal.

The advantages of these known devices are the high speed of measuring and the great accuracy of measurement in the case of relatively quick movements of pattern. A disadvantage is, however, that only the intensity of a small part (one or two measuring points) is measured, due to which the error-sensitivity of suchlike devices to deviations in the course of the intensity pattern, as well as to exogenous "overall" influences on the pattern, such as in this case influences of the general light intensity on the sensor signal, and also mechanical vibrations is relatively great.

### B. Summary of the invention

The object of the invention is to overcome the drawbacks of the known devices and for that purpose it provides a device of the sort described in section A1, which is characterized by a cyclically work ing first reading-out device for sequentially reading out and passing on, per reading-out cycle, the signals of at least the greater part of the sensors of the series of sensors; the signal of at least one sensor which is exposed to part of the pattern being presented, per measuring cycle, as a measuring sensor signal to normalizing means for converting the relevant measuring sensor signal into a normalized signal with a value which is a measure for the difference between that measuring sensor signal and a first reference signal or a second reference signal, which first reference signal is derived from the smallest of the sensor signals sequentially read out by the first reading-out device over one or more reading-out cycles, and which second reference signal is derived from the largest of the sensor signals sequentially read out over one or more reading-out cycles; each of the normalized signals being finally presented to a processing device for determining the extent and the direction of said movement from the respective normalized signals of two or more consecutive measuring cycles.

Owing to the above-mentioned measures, in this case the conversion of the relevant measuring sensor signal into a normalized signal which is independent of the absolute value of that measuring sensor signal, measuring errors in consequence of (exogenous) variations in "overall" influences will be eliminated. The fact is, these variations influence said reference signals, to which the relevant measuring sensor signal is related, in the same way as they influence that measuring sensor signal.

According to a further elaboration of the invention each measuring sensor signal is presented to at least one normalizing device for converting the relevant measuring sensor signal into a normalized signal with a value which corresponds to the quotient of on the one hand the difference between that measuring sensor signal and the first reference signal or the second reference signal and on the other hand the difference between this first reference signal and the second reference signal; the sensor signals which are sequentially read out per reading-out cycle by said first reading-out device being passed on to a lower value device for determining the smallest value of these signals over one or more reading-out cycles, and for delivering a lower value signal corresponding to that smallest value, as well as to an upper-value device for determining the greatest value of these signals over one or more reading-out cycles and for delivering an upper-value signal corresponding to that greatest value; half the sum of the upper-value signal and the lower value signal, decreased by a first fraction of the difference between the upper-value signal and the lower value signal being presented as a first reference signal to said normalizing device, and half this sum of the upper-value signal and the lower value signal increased by a second fraction of the difference between the upper-value signal and the lower value signal as a second reference signal.

It is noted that if said first and said second fraction of the difference between the upper-value signal and the lower value signal are equal to $1/2$, the first reference signal will be equal to the lower value signal and the second reference signal to the upper-value signal; this has been taken for granted in what follows, unless otherwise stated.

In a preferred embodiment of the invention the normalizing device comprises at least one digitizing device for converting the relevant measuring sensor signal into a discrete signal which is at least approximate to the former difference between that measuring sensor signal and the first or second reference signal, and the value of which is equal to an n-fold of a discrete step size - the step size being equal to a fixed fraction of the difference between the first reference signal and the second reference signal and $n = 1, 2, 3..., N$- and furthermore for converting said discrete signal into a digital code signal indicating the value of n. This preferred embodiment of the invention, in this case the normalizing device, offers not only the advantage of eliminating measuring errors caused by exogenous influences, but also the advantage that said step size will always be kept as small as possible, due to which the conversion error - the (small) difference between the (analog) value of the relevant measuring sensor signal and the value ( n x step size) of the discrete signal which approximates the former value as close as possible - is minimal.

According to a further preferred embodiment the invention provides control means, co-operating with the processing device, for controlling a second reading-out device for reading out the signal of one respectively some sensors of the series of sensors which are in an area with the c·  itest quantity/position sensitivity of the pattern. Owing to this measure it is achieved that for the movement of the pattern always that sensor or those sensors will be used which are at that moment most sensitive to detect a pattern movement, that is one which occurs in an area where the movement of the pattern causes a relatively great change in the relevant measuring sensor signal.

In order to be able to detect not only the extent, but also the direction of the pattern movements the invention preferably provides a second reading-out device for sequentially reading out and passing on per measuring cycle the signal of two or more sensors of said series of sensors.

Especially if the geometric pattern has a substantially sinusoidal course of quantity, the second reading-out device will - under the control of the control means - preferably read out as a measuring sensor signal the signal of (at least two) sensors of the series of sensors with a distance between them which corresponds to the quotient of half the length of the period of the course of quantity and the number of measuring sensor signals. Owing to this it is achieved firstly that the direction of movement can be measured, and secondly that one of the sensors will always be in an area where the quantity/-position sensitivity is great. For example, when reading out two measuring signals these will be the areas (m. 180 + /- 45) degrees (m = ...-3, -2, -1, 0, 1, 2, 3...), in other words, areas of 45 degrees on either side of the points of intersection of the sinusoidal course of quantity with the average value of that course; when reading out three measuring signals these will be the areas (m.180 + /- 30) degrees, so the areas of 30 degrees on either side of said points of intersection. It is noted that although, consequently, more than one signal will be read out - to wit for the purpose of detecting the direction of the movement - only one of these signals will be used for calculating the extent of that movement, that is to say the signal of a sensor located in an area indicated hereinbefore, where the measuring sensitivity is relatively great. The above will be explained in the description of the figures.

In order to digitize the measuring sensor signal, which is in the area with the greatest measuring sensitivity, as indicated hereinbefore, and which for that reason is selected by the processing device for calculating the extent of the pattern movement with an even greater accuracy (that is with an even smaller step size) another preferred embodiment of the invention does not comprise a normalizing device, but a first normalizing device and a second normalizing device, of which first normalizing device the first reference signal is equal to said lower-value signal and the second reference signal is equal to said upper-value signal, and of which second normalizing device the first reference signal is equal to half the sum of the upper-value signal and the lower-value signal (the average value of the under and the upper-value signal), decreased by a first fraction of the difference between the upper-value signal and the lower-value signal, and the second reference signal is equal to said half sum of the upper-value signal and the lower-value signal, increased by a second fraction of said difference between the upper-value signal and the lower-value signal, which first and second fraction both have a value equal to half the sinusoid al value of 90 degrees divided by the number of measuring sensor signals read out by the second reading-out device.

In the aforesaid preferred embodiment each of the measuring sensor signals is digitized both by a digitizing device which is part of the first normalizing device and by a digitizing device which is part of the second normalizing device. The measuring sensor signals are digitized in the first normalizing device and then presented to the pro cessing device, which calculates the direction of the pattern movement and moreover determines which sensor is in an area with the greatest measuring sensitivity (as indicated above). The first reference signal of the first normalizing device is equal to the lower-value signal, the second reference signal to the upper-value signal. The measuring sensor signals are digitized not only in the first normalizing device, but also in the said second normalizing device. The first and the second reference signal of this second normalizing device correspond to (the signal values of) the borders of said areas with a great measuring sensitivity. If, for example, the number of measuring sensor signals read out by the second reading-out device is 2, said borders will be at a value which is equal to the average value of the upper-value signal and the lower-value signal (= half the sum of these signals), increased respectively decreased by sin-(90/2)- = $1.2\sqrt{2}$ -times half the difference between the upper-value signal and the lower-value signal. The measuring sensor signal of the sensor which is within such an area with a great measuring sensitivity, will always have a value which is between said borders. This measuring sensor signal can now be converted into a discrete signal of n x a step size and then into a digital code signal, as explained above. However, because of the fact that the first and the second reference signal are a factor of $1.2\sqrt{2}$ closer to each other than the first and the second reference signal of the above-mentioned first normalizing device, the step size, according to which the relevant measuring sensor signal in the second normalizing device (in this case in the relevant digitizing device) is digitized, will also be a factor of $1.2\sqrt{2}$ smaller. Owing to this the maximum difference (= the maximum error) between the analog value of the relevant measuring sensor signal and the discrete value (n x step size) approximating the former value as well as possible, will also be a factor of $1/2\sqrt{2}$ smaller. It is noted that the other measuring sensor signals read out by the second reading-out device will not (cannot) be digitized by the second normalizing device (in this case the relevant digitizing devices) since the values of these measuring sensor signals are outside the borders of the measuring sensitive areas and, consequently, also outside the area between the first and the second reference signal. So these measuring sensor signals are digitized exclusively by the digitizing devices which are part of the first normalizing device, of which digitizing devices the first and the second reference signal are farther apart, i.e. are equal to the smallest respectively the largest sensor signal of the whole series of sensors read out by the first reading- out device. The above will be further explained in the description of the figures.

C. References: none.

D. Brief description of the figures

Figure 1 shows a preferred embodiment of the invention.

Figure 1a shows the relation between i.a. a measuring sensor signal and the first and the second reference signal of a normalizing device.

Figures 2a, 2b, 2c and 2d show the movement of an intensity pattern with a sinusoidal course, from which pattern it can be seen that always one of the two sensors, which are 1/4-period apart from each other, is in an area with the greatest measuring sensitivity.

Figure 3 shows an extension of the preferred embodiment of the invention by means of additional digitizing devices for extra accurately digitizing the measuring sensor signal selected by the processing device for the purpose of the calculation of the extent of a pattern movement.

Figure 4 shows an embodiment for applying a device according to the invention for measuring very small movements.

## E. Description of the figures and embodiments

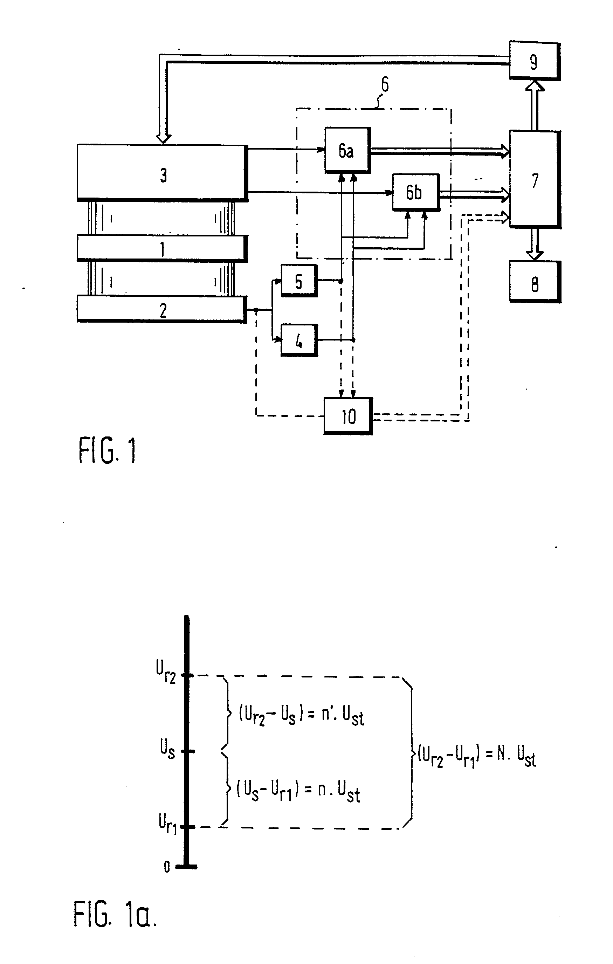

Figure 1 shows a series of sensors 1, consisting of a series of 50 sensors, e.g. photo diodes, lying next to one another. The sensors are exposed to an (part of an) intensity pattern, e.g. an optical inter ference pattern, with a sinusoidal course, notably in such a way that the length of a period corresponds to the length of the series of sensors 1.

The output terminals of the sensors are connected to a first reading-out device 2 as well as to a second reading-out device 3, which are both formed by a multiplexer.

The first reading-out device 2 sequentially reads out the output terminals of the sensors 1 and passes on their signal to a lower-value device 4 as well as to an upper-value device 5. These devices are each formed by a device as disclosed in the Netherlands patent application 86.03171, which device delivers an output signal which corresponds to the minimum or the maximum of the sequential sensor signals presented. The lower-value device 4 has been set to deliver an output signal corresponding to the lowest value of the sensor signals, the upper-value device 5 has been set to deliver an output signal corresponding to the highest value of the sensor signals.

Under the control of a control device 9 the second reading-out device 3 reads out two sensors 1, which are at a distance of (abt.) 1/4-period ( = 1/2-period) the number of sensors: 2) from each other, and passes on the output signal of these two sensors to a normalizing device 6. The function of this normalizing device 6 will be explained with the help of figure 1a. In this figure 1a the values of a measuring sensor signal $U_s$, a first reference signal $U_{r1}$ and a second reference signal $U2$ read out by the second reading-out device 3 are indicated with regard to a common O-level. The first reference signal $U_{r1}$ is obtained from said lower-value device 4, the second reference signal $U_{r2}$ from the upper-value device 5. So the measuring sensor signal $U_s$ always has a value between the first reference signal $U_{r1}$ -equal to the smallest sensor signal $U_{min}$ read out by the first reading-out device 2 - and the second reference signal $U_{r2}$ - equal to the largest sensor signal $U_{max}$ read out by the first reading-out device 2 -. In the normalizing device 6 the measuring sensor signal $U_s$ read out is converted into a converted signal $U_c$, with a value which is a measure for the quotient of on the one hand the difference between $U_s$ and $U_{r1}$ or $U_{r2}$, and on the other hand the difference between $U_{r2}$ and $U_{r1}$:

$$U_c = A (U_s - U_{r1}) / (U_{r2} - U_{r1}) \qquad [1a]$$

or

$$U_c = A (U_{r2} - U_s) / (U_{r2} - U_{r1}), \qquad [1b],$$

in which A is a constant. Owing to this way of defining $U_c$ is immune to exogenous "overall"-influences which, as a matter of fact, equally influence, either additively or multiplicatively, the signal values of all the sensors.

In the preferred embodiment shown in figure 1 said normalizing device 6 is formed by two generally known digitizing devices 6a and 6b, in which (vide figure 1a) the relevant signal $U_s$ is converted into a discrete signal with the value $n.U_{st}$ [2], approximately equal to:

$(U_s - U_{r2})$ (or $(U_{r2} - U_s)$ [1b]).

The step size $U_{st}$ is in this case derived from the difference between $U_{r2}$ and $U_{r1}$ and is equal to a certain fraction 1/N of that difference (e.g. 1/256):

$$U_{st} = (U_{r2} - U_{r1}) / N \qquad [3].$$

From [2] and [3] it follows that:

$$n.U_{st} = n (U_{r2} - U_{r1}) / N \qquad [4].$$

Besides is (approximately):

$$N.U_{st} = (U_s - U_{r1}) \qquad [5],$$

so that from [4] and [5] it follows that:

$$n = N (U_s - U_{r1}) / (U_{r2} - U_{r1}).$$

If the value for N is equal to the value for A in [1a], then the number of steps n will, consequently, be equal to the desired converted signal $U_c$. If the value of $U_s$ is not related to $U_{r1}$, but to $U_{r2}$ (vide [1b], it can be proved on the analogy of what precedes that also in that case the number of steps n will be a measure for the desired converted signal $U_c$.

Next the value for n will be converted in the digitizing device 6a respectively 6b into a digital code word, e.g. consisting of 8 bits (appropriate to N = 256).

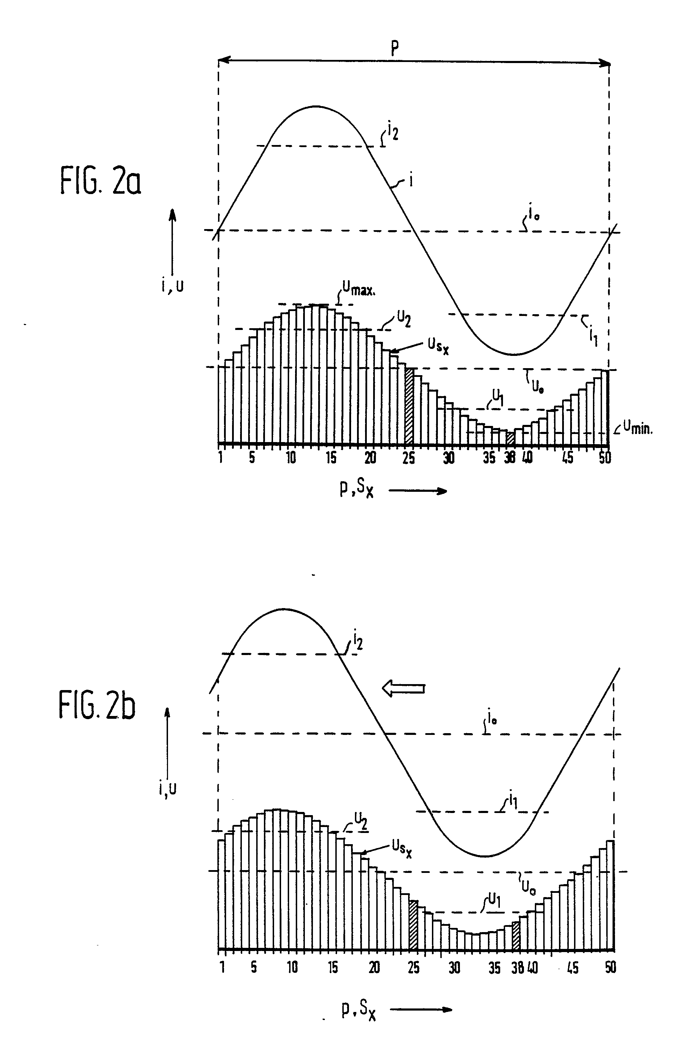

Besides the advantage that exogenous changes in the condition have no influence on the measurement result, the additional advantage that always with the smallest possible step size (to wit with steps of $U_{st} = (U_{r2} - U_{r1}) / N$. vide [4]) and consequently with the greatest possible accuracy is digitized will be obtained, if the normalizing device 6 comprises the digitizing devices 6a and 6b, for the fact is that the smaller the step size, the smaller the (maximum) difference (the maximum error) between the (analog) value $(U_s - U_{r1})$ [1a], respectively $(U_{r2} - U_s)$ [1b], and the discrete value $n.U_{st}$ most approximate to the former value. This will be further explained in the description of the figures 2a...2d.

The digital code signals of the two digitizing devices 6a and 6b are presented to a digital processing device 7 (a microprocessor), which calculates from the code signals successively presented the direction and the extent of the shifting of the intensity pattern and represents them on a display 8. At the initialization of the device preceding the measurements of movement the control device 9 is set by the processing device 7 to control the second reading-out device 3 in the desired way, i.e. in such a manner that the respective signals of two sensors with a distance between them of 1.4-period will be read out from the series of sensors.

In the foregoing it was supposed that the intensity pattern is such (or is set in such a way) that the length of a period corresponds to the length of the series of sensors. If, however, this cannot be realized, the device can be extended in such a way that at the initialization of the device by the processing device 7 the length of the period of the intensity pattern can be calculated, which calculated length of period will then be used in the calculations when movements are measured. The above also applies to the form of the intensity course: if the course of the pattern intensity is unknown, this course can, at the initialization of the device, be registered and recorded, and then serve as a calculation basis when movements are measured. When it is to be expected that the period and/or the course of the pattern will not remain constant, then an intermediate reinitialization of the device has to take place; this has of course to be limited to a minimum because of the relatively long processing times (id est the time for processing all the sensor signals).

Figure 1 shows the said possible extension by means of dashed lines. This extension consists of a digitizing device 10 - an A-D-converter - the (analog) input terminal of which is connected to the output terminal of the first reading-out device 2, and the (digital) output signals of which are presented to the processing device 7. At the initialization of the device the sensor signals of the series of sensors 1 will be sequentially passed on by the first reading-out device 2 to the digitizing device 10, where they are converted into digital code signals, which are then presented to the processing device 7, in which the form and the length of the period of the (initial) intensity pattern are now recorded, from which information will be started when calculating afterwards occurring movements of that intensity pattern. So without the said extension the information concerning the form of the relevant intensity pattern has to be introduced into the processing device 7 beforehand.

With the aid of the figures 2a...2d the working of the device according to the above-described preferred embodiment will now be more deeply gone into. These figures show the (sinusoidal) course of intensity I(p) of a part of an intensity pattern, as well as the respective output signals Usx (p) of the sensors (S1...S50) of the series of sensors 1. In the figure it is assumed that the length of the period P is equal to the length of the series of sensors 1 (in the case of an optical pattern this can generally be realized in a simple way be means of one or more lenses).

During the initialization of the device the processing device 7 determines which two sensors Sx of the series of sensors 1 will be used for the actual measurement of movement. The only condition in this case is that the relevant sensors are at a distance of 1.4 P apart from each other, due to which - as it will appear hereafter - always one of the sensors is in an area corresponding to (m. 180 + .-45) degrees (m = ...-3, -2, -1, 0, 1, 2, 3...) of the sine, the measuring sensitivity of which will, consequently, be great. In the figures the sensors S25 and S38, with a distance between them of 1.4.50 = (round) 13 sensors, have been chosen.

Further indications in the figures are:

I0, the average value of I;

I1, the value of I for (m.180 + 45) degrees;

I2, the value of I for (m.180 - 45) degrees;

U0, the average value of Usx;

U1, the value of Usx for (m.180 + 45) degrees;

U2, the value of Usx for (m.180 - 45) degrees;

Umin, the minimum value of Usx;

Umax, the maximum value of Usx.

From a mathematical point of view the relation between these values is:

$U0 = 1/2 (Umax + Umin)$ [6]

$U1 = U0 - (U0 - Umin) \sin 45$ [7]

[6] and [7]: $U1 = 1/2 (Umax + Umin) - 1.2 (Umax - Umin) \sin 45$

$= 1/2 (Umax + Umin) - 1/4\sqrt{2} (Umax - Umin)$ [8]

$U2 = U0 + (Umax - U0) \sin 45$ [9]

[8] and [9]: $U2 = 1/2 (Umax + Umin) + 1.2 (Umax - Umin) \sin 45$

$= 1/2 (Umax + Umin) + 1.4\sqrt{2} (Umax + Umin)$ [10].

It is noted that the fact that in figure 2a the value of the output signal of sensor S25 corresponds to U0, and that the value of the output signal of sensor S38 corresponds to Umin has no significance at all; another pair of sensors with a distance between them of 13 sensors could equally have been chosen.

The figures 2a...2d show a movement of the intensity pattern to the left with a length of shift of four sensors per figure (chosen at random). The signals of the sensors S25 and S38 are always passed on -via the digitizing devices 6a and 6b - to the processing device 7, which can deduce the direction of movement of the itensity pattern from the respective changes of the two measuring sensor signals Us25 and Us38. The calculation of the extent of said movement, however, takes place on the basis of the change of the output signal of that sensor (S25 and S38) which is then in an area with the greatest measuring sensitivity. The processing device 7 has been programmed in such a way that this selection (Us25 or Us38) will automatically take place in it.

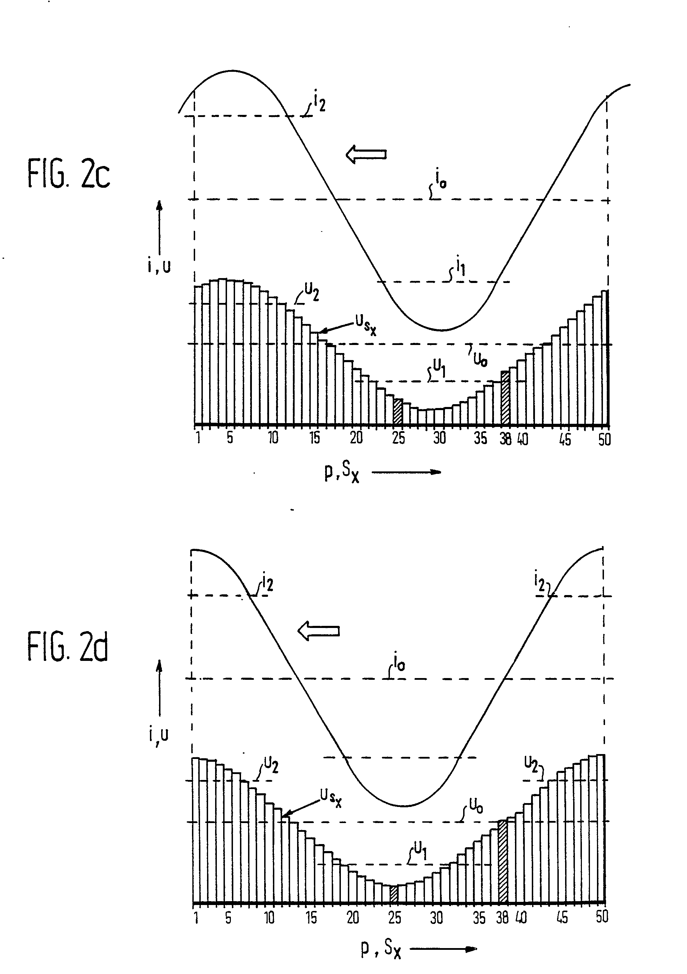

In the figures 2a and 2b S25 is in the measuring sensitive area, and, consequently, Us25 will be used for calculating the extent of the movement of the intensity pattern. In the figures 2c and 2d S25 has come outside the measuring sensitive area due to the shift of the pattern; S 38, however, has come into such an area at the same time, due to which Us38 instead of Us25 will be used for calculating the extent of the movement of the intensity pattern.

In the figures 2a...2d it has been visualized that Us25 and Us38 always have a value smaller than or equal to Umax and greater than or equal to Umin. As already indicated, the measuring sensor signals Us25 and Us38 are digitized in the digitizing devices 6a and 6b. For the purpose of converting into (one out of 256) digital code signals a value, equal to n x a step size (n = 1...256), will be allocated to the signal Us25 respectively Us38 (minus the value Ur1 = Umin; see figure 1a) presented to the input terminal of the relevant digitizing device 6a respectively 6b, which value approximates the signal presented in the best possible way. The maximum difference between the (analog) signal presented and the (discrete) signal allocated is equal to the step size. The smaller the step size, the smaller this difference and, consequently, the greater the accuracy of the device. The step size is derived from the difference between Umin and Umax; for this is the area within which the output signals of the sensors read out by the second reading-out device 3 are. By now determining continuously (or frequently), be means of the lower-value device 4 and the upper-value device 5, the values Umin and Umax and presenting them as a first respectively second reference signal Ur1 respectively Ur2 -from which the step size is derived - to the digitizing devices 6a and 6b (and possibly to the said digitizing device 10), the step size of the discrete signals in the digitizing devices 6a and 6b (and 10) will be minimal. According to the present embodiment the step size is equal to (Umax - Umin)/N. Apart from the fact that the step size is minimal and, as a consequence, the accuracy maximal, it is moreover achieved that the device is very little sensitive to measuring errors due to variations in "overall" circumstances, id est circumstances which have the same influence on all the sensors. When using a device according to the invention for measuring the movement of an optical intensity pattern, this will be for example the light intensity of the ambient light falling on the device, in this case the series of sensors 1. As proved hereinbefore the value of the converted signal, in this case the digital code signal, corresponding to the value of n, will, however, not be influenced by variations in the intensity of the ambient light, since Umax and Umin are equally influenced by these variations as the relevant measuring sensor signal, due to which the advantage is obtained that the device need not be protected against such circumstances, in this case against ambient light.

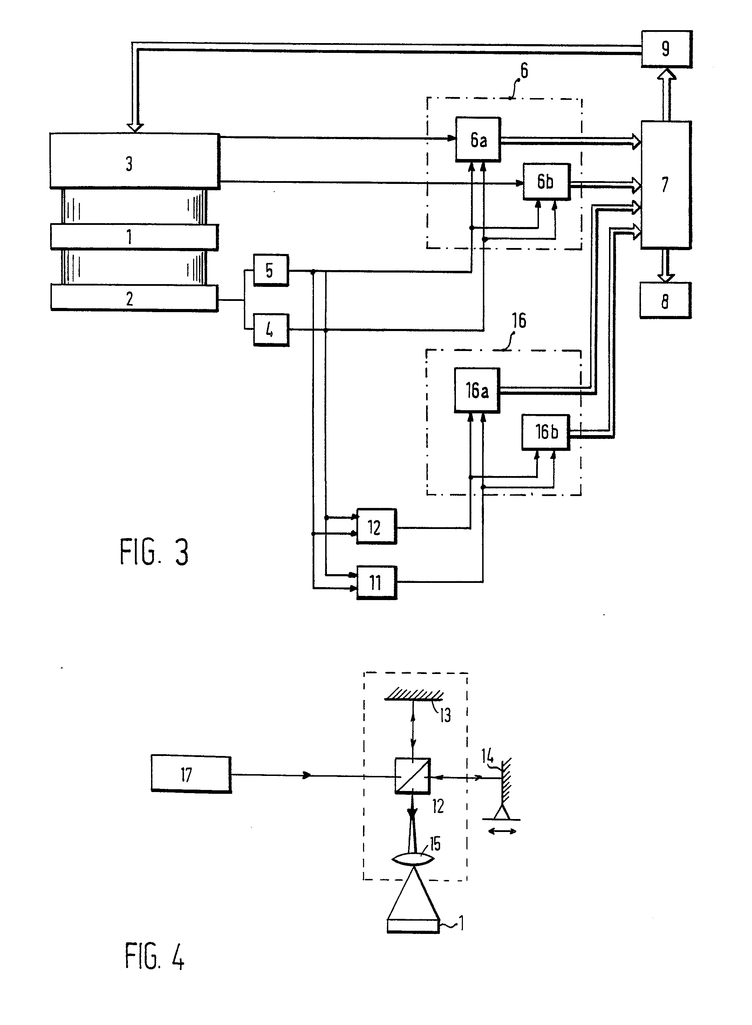

Figure 3 shows a device according to a preferred embodiment of the invention, which device comprises two normalizing devices, to wit a first normalizing device 6 already indicated hereinbefore and comprising the digitizing devices 6a and 6b, and a second normalizing device 16, which also comprises two digitizing devices, 16a and 16b. The two measuring sensor signals (S25 and S38 in the figures 2a ... 2d) read out by the second reading-out device 3 are presented to the input terminal of the relevant digitizing device 6a respectively 6b of the first normalizing device 6 as well as to the input terminal of the relevant digitizing device 16a respectively 16b of the second normalizing device 16. The former digitizing devices digitize the relevant measuring sensor signals by making use of the lower-value signal respectively the upper-value signal (Umin respectively Umax in figure 2a), delivered by the lower-value device 4 respectively the upper- value device 5, as a first respectively second reference signal (Ur1 respectively Ur2 in figure 1a), due to which the relevant measuring sensor signals are each converted into one out of N(256) code signals, corresponding to the similar discrete signal value between Umin and Umax. Because of the fact that the measuring sensor signals always have a value between or equal to Umin and Umax the two measuring sensor signals read out can always be converted into one of the (256) digital code signals. The code signals are presented to the digital processing device 7, which firstly deduces from them the direction of the pattern movement (which takes place by comparing the code signals with one another and with the last but one code signal of the code signals of the same two sensors presented to the processing device 7), and secondly determines which sensor (S25 or S38 in the figures 2a...2d) is in one of the areas with a great measuring sensitivity, in this case the areas between (m.180 - 45) and (m.180 + 45) degrees. The signal of this sensor will be used for calculating the extent of the pattern movement. The signal of the measuring sensor (S25 in the figures 2a and 2b and S38 in the figures 2c and 2d) thus selected will also be digitized in the relevant digitizing device 16a respectively 16b of the second normalizing device 16, in which case, however, use is made of reference signals which are closer to one another than the reference signals of the first normalizing device 6, for these signals have the level of the signal values at the borders of said measuring sensitive areas. This is possible due to the fact that the measuring sensor signal which has been selected by the processing device 7 for calculating the extent of the pattern movement always has a value which does not exceed said borders. Because of the fact that in this way the digitization (with the same number of steps. but of a smaller step size) takes place within narrower borders (formed by the reference signals), the maximum digitizing error (the maximum difference between the analog measuring sensor signal presented and the discrete signal approximating this analog signal) will become proportionally smaller; owing to this the calculation result of the extent of the pattern movement will consequently be more accurate.

The second normalizing device 16 (in this case the digitizing devices 16a and 16b) gets its first reference signal (Ur1 in figure 1a) from the output terminal of a first reducing device 11. The lower-value signal (Umin) of the lower-value device 4 as well as the upper-value signal (Umax) of the upper-value device 5 are presented to this first reducing device 11, which reduces the signals Umin and Umax presented to a first reference signal U'r1 with a value which is equal to U1 in figure 2a (see also [8]):

U'r1 = 1/2 (Umax + Umin) - 1/4√2 (Umax - Umin).

The second reference signal (Ur2 in figure 1a) is obtained in a similar way from a second reducing device 12, which delivers an output signal U'r2, equal to U2 in figure 2a (see also [9]):

U'r2 = 1/2 (Umax + Umin) + 1/4√2 (Umax - Umin).

In this way the measuring sensor signal selected by the processing device 7 for calculating the extent of the pattern movement is digitized with a step size which is 1/2√2 smaller than the step size with which is digitized in the digitizing devices 6a and 6b, for the step size of the digitizing devices 6a and 6b is equal to:

(Ur2 - Ur1) / N = (Umax - Umin) / N    [11].

The step size in the digitizing devices 16a and 16b, however, is equal to:

(U'r2 - U'r1) / N = {[1/2 (Umax + Umin) + 1/4√2 (Umax - Umin)] -[1/2 (Umax + Umin) - 1/4√2 (Umax - Umin)]} / N = 1/2√2 (Umax - Umin) / N    [12].

Finally it is noted that it is true that both measuring sensor signals (Us25 and Us38 in the figures 2a...2d) are presented to the relevant digitizing device 16a respectively 16b, which are part of the second normalizing device 16, but that only the measuring sensor signal with a value within the borders (U2 and U1) of the measuring sensitive areas (and consequently between U'r2 and U'r1) will be digitized by the relevant digitizing device 16a respectively 16b, because of the fact that the other measuring sensor signal has a value which is either smaller than the first reference signal (U'r1), or larger than the second reference signal (U'r2).

Figure 4 shows an application of a device according to the invention, to wit as a measuring device for object movements in the submicron area. The figure shows a laser 17. which irradiates a Michelson Interferometer, in which the laser beam (with a homogeneous Gaussian intensity distribution) is divided in a dividing cube 12 into two divided beams, one of which will be reflected by a fixedly mounted mirror 13 and the other one by a movable mirror 14, connected to an object (not shown in the figure), the movements of which have to be measured. The two reflected divided beams cause an interference pattern, which will be projected via a lens (or a system of lenses) 15 on the aforesaid series of sensors 1, which in this case consists of a series of photo diodes, which convert the interference pattern projected on the sensor 1 into a series of electric signals (Usx in the figures 2a...2d). At the initialization of the device the period length P of the interference pattern (the optical course of intensity of which is sinusoidal) can be made equal to the length of the series of sensors 1 by means of the lens 15. Movements of said object will cause shifts of the interference pattern due to the same movements of the mirror 14. These shifts can be measured by the device according to the invention in the way described above.

It is noted that the invention is not restricted to the use of a series of sensors 1, the sensors of which extend in one direction, such as in the embodiment described above. The invention lends itself also to the use of two-dimensional series of sensors (e.g. in video cameras) or three-dimensional series of sensors. Thus two-dimensional respectively three-dimensional changes in the intensity patterns can be quickly and accurately processed in a similar way.

Finally it is noted that the physical quantity of the intensity of pattern per se is of no importance at all for the working of the present invention; in other words, the device according to the invention is suitable for measuring the movement of intensity patterns of any physical quantity whatsoever, either light intensity (an implementation of which has been described in what precedes), pressure, magnetic field intensity and so forth. It will be obvious that for these quantities suitable sensors have to be available.

## Claims

1. Device for measuring the movement of spatially extending pattern of physical quantity differences, at least part of that pattern being brought into contact with a series of sensors, consisting of a multiple of sensors extending over a certain geometric area, which sensors each deliver a signal corresponding to the relevant local quantity, characterized by a cyclically working first reading-out device (2) for sequentially reading out and passing on, per reading-out cycle, the signals of at least the greater part of the sensors of the series of sensors; the signal of at least one sensor which is exposed to part of the pattern being presented, per measuring cycle, as a measuring sensor signal (Us) to normalizing means (6, 16) for converting the relevant measuring sensor signal (Us) into a normalized signal with a value which is a measure for the difference between that measuring sensor signal and a first reference signal (Ur1) or a second reference signal (Ur2), which first reference signal is derived from the smallest of the sensor signals sequentially read out by the first reading-out device over one or more reading-out cycles, and which second reference signal is derived from the largest of the sensor signals sequentially read out over one or more reading-out cycles; each of the normalized signals being finally presented to a processing device (7) for determining the extent and the direction of said movement from the respective normalized signals of two or more consecutive measuring cycles.

2. Device in accordance with claim 1, characterized in that each measuring sensor signal is presented to at least one normalizing device (6, 16) for converting the relevant measuring sensor signal (Us) into a normalized signal with a value which corresponds to the quotient of on the one hand the difference between that measuring sensor signal and the first reference signal (Ur1) or the second reference signal (Ur2) and on the other hand the difference between this first reference signal and the second reference signal; the sensor signals which are sequentially read out per reading-out cycle by said first reading-out device (2) being passed on to a lower-value device (4) for determining the smallest value of these signals over one or more reading-out cycles, and for delivering a lower-value signal (Umin) corresponding to that smallest value, as well as to an upper-value device (5) for determining the greatest value of these signals over one or more reading-out cycles and for delivering an upper-value signal (Umax) corresponding to that greatest value; half the sum of the upper-value signal and the lower-value signal, decreased by a first fraction of the difference between the upper-value signal and the lower-value signal being presented as a first reference signal to said normalizing device, and half this sum of the upper-value signal and the lower-value signal increased by a second fraction of the difference between the upper-value signal and the lower-value signal as a second reference signal.

3. Device in accordance with claim 2, characterized in that said normalizing device (6, 16) comprises at least one digitizing device (6a respectively 6b) for converting the relevant measuring sensor signal (Us) into a discrete signal which is at least approximate to the former difference between that measuring sensor signal and the first or second reference signal (Ur1 respectively Ur2), and the value of which is equal to an n-fold of a discrete step size (Ust) - the step size being equal to a fixed fraction (1 N) of the difference between the first reference signal and the second reference signal and n = 1, 2, 3..., N- and furthermore for converting said discrete signal into a digital code signal indicating the value of n.

4. Device in accordance with one of the preceding claims, characterized by control means (9), co-operating with said processing device (7), for controlling a second reading-out device (3) for reading out the signal of one respectively some sensors of said series of sensors (1), which are in an area with a relatively great quantity/position sensitivity of the pattern.

5. Device in accordance with one of the preceding claims, characterized by a second reading-out device (3), for per measuring cycle sequentially reading out and passing on as a measuring sensor signal the signal of two or more sensors of the series of sensors (1).

6. Device in accordance with one of the preceding claims, the geometric pattern showing a substantially sinusoidal course of quantity, characterized in that the sensors, the signal of which serves as a measuring sensor signal, have a distance between them which corresponds to the quotient of on the one hand half the length of the period of the course of quantity and on the other hand the number of sensor signals read out by the first reading-out device.

7. Device in accordance with claim 6, characterized by a first normalizing device (6) and a second normalizing device (16), of which first normalizing device the first reference signal (Ur1) is equal to said lower-value signal (Umin) and the second reference signal (Ur2) is equal to said upper-value signal (Umax), and of which second normalizing device (16) the first reference signal (U'r1) is equal to half the sum of the upper-value signal and the lower-value signal, decreased by a first fraction of the difference between the upper-value signal and the lower-value signal, and the second reference signal (U'r2) is equal to said half sum of the upper-value signal and the lower-value signal, increased by a second fraction of said difference between the upper-value signal and the lower-value signal. which first and second fraction both have a value equal to half the sinusoidal value of - in degrees - 90 divided by the number of sensor signals read out by the reading-out device (2).

8. Device for measuring the movement of an optical pattern in accordance with one of the preceding claims, said sensors being formed by photoelectric converters.

9. Device for measuring the movement of an object, the object being connected to a reflecting device (14), which is irradiated via an interferometer by a source of light (11), the movement of the optical interference pattern excited by the interferometer being projected on a device in accordance with claim 8.

FIG. 1

$$U_{r2} \quad (U_{r2} - U_S) = n'.\, U_{st}$$

$$U_S$$

$$(U_{r2} - U_{r1}) = N.\, U_{st}$$

$$(U_S - U_{r1}) = n.\, U_{st}$$

$$U_{r1}$$

$$0$$

FIG. 1a.

0 292 069

FIG. 2a

FIG. 2b

FIG. 2c

FIG. 2d

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 094 522 (EUROPEAN ELECTRONIC SYSTEMS) <br> * Abstract; figures; claims * | 1-9 | G 01 D 5/26 <br> G 01 B 11/02 |
| Y | IBM TECHNICAL DISCLOSURE BULLETIN, vol. 25, no. 5, October 1982, pages 2349-2350, New York, US; H. BAIER et al.: "Line width measurement in grey level digitized patterns" <br> * Whole article * | 1-9 | |

TECHNICAL FIELDS
SEARCHED (Int. Cl.4)

G 01 D
G 01 B

The present search report has been drawn up for all claims

| Place of search | Date of completion of the search | Examiner |
|---|---|---|
| THE HAGUE | 25-08-1988 | LLOYD P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        .......
& : member of the same patent family, corresponding document

EPO FORM 1503 03.82 (P0401)